# EUROPEAN PATENT APPLICATION

(11) **EP 2 677 612 A1**
(43) Date of publication of application: **25.12.2013**
(21) Application number: 12172608.7
(22) Date of filing: 19.06.2012
(51) Int. Cl.: H02B 13/055, H02B 1/56, H02B 13/035, H02B 13/045, H02G 5/06, H02G 5/10

(54) **Gas-insulated electrical apparatus having gas channel system, and method of operating the apparatus**

(71) Applicant: ABB Technology AG, 8050 Zürich (CH); ABB Research Ltd., 8050 Zürich (CH)
(72) Inventor: Kriegel, Martin, CH-5420 Ehrendingen (CH); Claessens, Max-Steffen, 5417 Untersiggenthal (CH); Paul, Thomas Alfred, 5400 Baden (CH); Kramer, Axel, 5430 Wettingen (CH)
(74) Representative: ABB Patent Attorneys

(57) **Abstract**

A gas-insulated electrical apparatus (1) comprises a housing (10), a high-voltage component (20) arranged within the housing (10) and adapted for application of a high voltage, and a gas channel system (30) having a gas channel (31), a channel inlet (32) and a channel outlet (34) in gas communication with the housing (10). The housing (10) and the gas channel system (30) form a gas-containing volume containing an insulating gas therein, and define a closed loop allowing a circulation of the insulating gas through the housing (10) and the gas channel system (30) along the closed loop.

## Description

### Technical Field

The present invention relates to a gas-insulated electrical apparatus, in particular a gas-insulated high-voltage power distribution or transmission component, such as a busbar, circuit breaker, disconnector or other switchgear module, having a gas channel system which allows a circulation of insulating gas.

### Technical Background

In gas-insulated electrical apparatuses, such as high-voltage circuit breakers or circuit breaker components, the insulation gas plays an important role in avoiding electrical breakdown due to its dielectric properties, and also possibly in extinguishing an electric arc during a breaking operation. Thus, the electrically active part in medium or high voltage metal-encapsulated switchgears is arranged in a gas-tight compartment which encloses an insulation gas with a pressure of several bars which electrically separates the compartment of the apparatus from the electrically active part. In other words, the insulation gas does not allow the passage of electrical current from the electrically active part to the compartment.

For performing its tasks as a dielectric and possibly as an extinguishing gas, the gas needs to have certain operating parameters, such as temperature and pressure. Thus, in order to maintain the safety and functionality of the electrical apparatus, it should be ensured that the insulating gas has a suitable temperature, pressure and other operating parameters.

A common problem for temperature' control of the insulation gas is the heat which is generated during operation. Such heat is generated during normal operation when the circuit-breaker has to carry a nominal current, and is even more likely to occur in the case of an overcurrent above the nominal current. The heat is typically not generated evenly, but instead hot-spots may be created at points of particularly high electrical resistance and/or high current, such as at the touching points of nominal contacts of a circuit breaker or disconnector. Thus, the temperature distribution under nominal current load is usually very inhomogenous. The "hot spots" nearly reach the maximum allowed temperature (105° C), whereas other regions in the vessel are only heated very moderately.

There have been several cooling schemes for cooling a high-voltage device. For example, JP 9163530 A describes a gas-insulated switching apparatus in which a cooling fan is provided. The fan is rotated by the magnetic flux caused by an AC current flowing through a conductor in the container. The rotation of the cooling fan allows the temperature in the container to be averaged.

A commonly used dielectric insulation gas is sulfur hexafluoride (SF₆) which exhibits excellent insulation and electric arc extinguishing capabilities. However, SF₆ is a strong contributor to the greenhouse effect and thus has a high global warming potential. Therefore, alternative insulation fluids should be found. Several alternative insulation gases have been identified. Some of these alternatives comprise multi-component fluid mixtures, i.e., they comprise more than one molecular or atomic species. Also, some of the gas may have a liquid condensate portion. The term "gas" as used herein does not exclude the presence of such a liquid condensate portion.

The dielectric break-down strength of such multi-component gas mixtures may depend more sensitively on operating parameters, or on more operating parameters, than SF₆. For example, an important operating parameter can be the concentration ratio of the mixture components of the gas. Also, the operating parameters may be spatially inhomogenous inside the gas-insulated electrical apparatus and, in particular, may be varying with time. Hence, there is the desire to ensure that the operating parameters of the insulation gas are suitable, in particular during operation of the electrical apparatus.

### Summary of the Invention

In view of the above, a gas-insulated electrical apparatus an operating method for the electrical apparatus according to the independent claims are provided. Further advantages, features, aspects and details that can be combined with embodiments described herein are evident from the dependent claims, the description and the drawings.

According to a first aspect, a gas-insulated electrical apparatus, in particular for high-voltage power distribution or transmission, is provided. The apparatus comprises a housing, a high-voltage component being arranged within the housing and being adapted for application of a high voltage, and a gas channel system comprising a gas channel, a channel inlet and a channel outlet in gas communication with the housing. The housing and the gas channel system form a gas-containing volume containing an insulating gas therein and define a loop, in particular a closed loop, allowing a circulation of the insulating gas through the housing and the gas channel system along the loop.

According to a second aspect, a method for operating a gas-insulated electrical apparatus, in particular a high-voltage power distribution or transmission apparatus, is provided. The electrical apparatus comprises a housing, a high-voltage component being arranged within the housing, a gas channel system having a gas channel, and an insulating gas contained in the housing and the gas channel system. The method comprises applying a high voltage to the high voltage component and forcing a circulation of the insulating gas along a loop, in particular a closed loop, through the housing and the gas channel system. The apparatus may include any additional elements described herein, and the method may include operating any of these additional elements.

The gas channel system allows gas circulation within the housing in such a manner that inhomogeneities are reduced. Hence, any inhomogeneities in the operating parameters of the gas, such as temperature, the concentration ratio or homogeneity of mixture of gas components, and the like, can be reduced. In particular, layering of different gas components of a gas mixture can be avoided, and/or temperature inhomogeneities can be avoided. Due to the homogenized operating parameters of the gas, a more reliable operation of the electrical apparatus can be achieved.

In embodiments of the apparatus, the insulation gas comprises at least a first and a second gas component, wherein the first gas component forms a carrier gas and the second gas component comprises heavier molecules, and wherein further the electrical apparatus comprises control means for controlling the circulation of the insulating gas through the loop such that a predetermined homogeneity of operating parameters, in particular a predetermined concentration ratio of the first gas component with the second gas component, is maintained in the housing at least during operation of the electrical apparatus. In a particular embodiment, the means for controlling of the predetermined concentration ratio may comprise means for measuring the concentration ratio.

In embodiments of the operating method, the insulation gas comprises at least a first gas component and a second gas component, wherein the first gas component forms a carrier gas and the second gas component comprises heavier molecules, and wherein further a flow rate of the insulating gas circulating through the loop defined by the housing and the gas channel system is controlled such that a predetermined homogeneity, in particular a predetermined concentration ratio of the first gas component with the second gas component, is maintained in the housing at least during operation of the electrical apparatus. In a particular embodiment, the controlling of the predetermined concentration ratio may comprise measuring the concentration ratio.

Herein, predetermined homogeneity shall encompass, in particular, a minimal desirable homogeneity or a range of desirable homogeneities in the housing, and predetermined concentration ratio shall encompass, in particular, a minimal desirable concentration ratio or a range of desirable concentration ratios in the housing.

### Brief description of the Figures

The details will be described in the following with reference to the figures, wherein
Figs. 1a to 1c are schematic cross-sectional side views of gas-insulated electrical apparatuses according to embodiments of the invention having, respectively, a gas channel which extends outside of a housing of the electrical apparatus;
Figs. 2a to 2c are schematic cross-sectional side views of gas-insulated electrical apparatuses according to further embodiments of the invention having, respectively, a gas channel which extends inside of a housing of the electrical apparatus;
Figs. 3a and 3b are schematic cross-sectional side views of gas-insulated electrical apparatuses according to further embodiments of the invention having, respectively, a gas channel which extends outside of a housing of the electrical apparatus and attached to the housing;
Figs. 4a to 4d are schematic cross-sectional front views of gas-insulated electrical apparatuses according to further embodiments of the invention;
Fig. 5 is a schematic cross-sectional front view of a gas-insulated electrical apparatus according to a further embodiment of the invention, the apparatus having a housing with three housing sections;
Figs. 6 and 7 are schematic cross-sectional side views of respective gas-insulated electrical apparatuses according to further embodiments of the invention; and
Figs. 8a to 8h are schematic cross-sectional side views of gas channel portions according to respective further embodiments of the invention.

### Detailed description of the Figures and of Embodiments

Reference will now be made in detail to the various embodiments, one or more examples of which are illustrated in each figure. Each example is provided by way of explanation and is not meant as a limitation. For example, features illustrated or described as part of one embodiment can be used on or in conjunction with any other embodiment to yield yet a further embodiment. It is intended that the present disclosure includes such modifications and variations.

Before the figures are described in detail, some further (optional) aspects of the invention are described. Unless indicated otherwise, each of these aspects can be combined with any other aspect.

According to one aspect of the invention, the gas-insulated electrical apparatus can be a high-voltage power distribution or transmission apparatus such as a busbar, circuit breaker, disconnector, or some other switchgear or switchgear module. Herein, "high voltage" means more than 1 kV. In particular, "high voltage" refers to 10 kV or more, more particularly 52 kV or more, e.g. 52 kV to 1100 kV, but potentially also higher voltages than 1100 kV.

According to a further aspect, the housing and the gas channel system may form a gas-tight volume containing an insulating gas therein. Herein, unless a specific insulation gas is specified, the term "containing an insulating gas therein" can also refer to the fact that the volume is adapted and destined for containing an insulation gas therein, without the insulation gas having been actually filled into the volume. Also, the term insulation gas does not exclude the presence of a liquid condensate portion of the insulation gas.

Furthermore, in an embodiment the term "containing an insulating gas therein" may include an additional source of insulating gas for refilling, in particular for refilling in case of loss of insulating gas by, for example, leakage, decomposition, recombination, contamination by arc by-products, any other molecular modification, condensation or other process. Such refilling could be effected or be supported by spraying or vaporizing, for example by heat or ultrasound or other means, from a liquid reservoir containing condensed insulating gas, or by feeding from a gas reserve volume, for example a pressurized or heated gas reserve volume. However, in another embodiment, the term "containing an insulating gas therein" may also exclude an additional source of insulating gas for refilling. In both cases, the loop for gas circulation is considered to be a closed loop.

In an embodiment, the electrical apparatus may further include a heating element, also referred to as a heater, arranged inside the gas channel and/or in contact to the gas channel. Herein, contact to the gas channel means that the the heating element is arranged such that substantial heat transfer from the heating element to the inside of the gas channel is possible through solid material (not just e.g. through gas flow of the insulation gas). The length of the path through the solid material for the heat transfer from the heating element to the channel may be less than 2 cm. The heating element may be located outside of the housing or inside the housing and thus exposed to the insulation gas. According to a further aspect, the heating element may be powered independently of a current traversing the high-voltage component.

In embodiments, the electrical apparatus may define a vertical direction when mounted, and the channel inlet and the channel outlet may be located at different vertical heights of the housing. Usually, but not necessarily, the orientation of the electrical apparatus when mounted is such that an axis of the high-voltage component extends in a horizontal direction. A vertical distance between the channel inlet and the channel outlet may, in particular, be at least half of a vertical height of the housing, which is defined as the maximum vertical height of the housing's inner volume.

Additionally or alternatively, the channel inlet and the channel outlet may be located at different horizontal positions of the housing. A horizontal distance between the channel inlet and the channel outlet may, in particular, be at least half of a horizontal length of the housing, which is defined as the maximum horizontal length of the housing's inner volume.

In embodiments, the channel inlet and the channel outlet may be spaced apart from each other by a distance being at least half of a linear extension (maximum linear extension) E of the housing in a direction between the channel inlet and the channel outlet, i.e. parallel to a line defined between the channel inlet and the channel outlet. The linear extension refers to the inner volume of the housing without any thickness of the housing walls.

In embodiments, the gas channel system may comprise a forced flow generator for generating a forced flow of the insulating gas through the gas channel, the forced-flow generator being arranged within the gas channel. The forced-flow generator may be a fan. The forced flow generator may be provided in addition to and separate from the heater. According to a further aspect, the forced flow generator may be arranged downstream of the heater. According to a further aspect, the forced-flow generator may be arranged upstream of the heater. In other embodiments, such active force-flow generator is absent and flow or circulation is effected passively through convection.

In embodiments, the channel may have an extended-diameter section. At least one of the forced-flow generator and the heater may be arranged within and/or in direct contact with the extended-diameter section. According to a further aspect, the gas channel system may comprise at least one of a gas filter, a gas inlet port, a gas pressure sensor, a gas temperature sensor, a gas chemical composition sensor, and an active or passive gas cooling element.

In embodiments, the gas channel may extend at least partially, or even fully, outside of the housing such that a torus-like form, with the gas channel being spaced away from the housing like a handle, is formed by the housing and the gas channel. According to an alternative aspect, the gas channel extends at least partially or even fully within the housing, or extends outside of the housing but is fully attached to the housing.

In embodiments, the gas channel may be made of a flexible material such as a polymer-based material, or may at least comprise one or more flexible portions. This allows the gas channel to be used for several housing geometries and may facilitate mounting of the gas channel.

In embodiments, the housing may comprise a plurality of housing sections detachable from each other and in gas communication with one another. The housing sections may, for example, be in gas communication with one another via the gas channel system, independently of the gas channel system, or both. The gas channel system, or a portion thereof, may extend between at least two different ones of the housing sections. According to a further aspect, the housing may comprise a plurality of housing sections, and the gas channel system may comprise a plurality of gas channels. Each of the gas channels may interconnect two respective ones of the housing sections via a respective channel inlet and a respective channel outlet so that the closed loop traverses alternatingly the housing sections and the gas channels.

The gas channel system is particularly useful in the case of the insulation gas having temperature-dependent properties in the temperature range relevant for operation of the apparatus, and/or in the case of the insulation gas being a mixture of several gas components. Namely, the gas channel system may promote a gas circulation in the housing that reduces the risk of layering of gas components or other inhomogeneities. Hence, according to a further aspect, the insulation gas may comprise at least a first and a second gas component. The first and the second gas components may have different specific weights and/or evaporation temperatures.

In embodiments, the first gas component may be selected from the group consisting of nitrogen, oxygen, carbon dioxide, nitric oxide, nitrogen dioxide, nitrous oxide, argon, methanes (in particular partially or fully halogenated methanes, and in particular tetrafluoromethane or trifluoroiodomethane), air (in particular technical air or synthetic air), and mixtures thereof. The second gas component may be selected from the group consisting of sulfur hexafluoride, partially or fully fluorinated ethers (in particular hydrofluoro monoethers, hydrofluoro monoethers containing at least 3 carbon atoms, perfluoro monoethers, or perfluoro monoethers containing at least 4 carbon atoms), partially or fully fluorinated ketones (in particular hydrofluoro monoketones, perfluoro monoketones, perfluoro monoketones comprising at least 5 carbon atoms, or perfluoro monoketones comprising exactly 5 or exactly 6 or exactly 7 or exactly 8 carbon atoms), and mixtures thereof. Heteroatoms replacing a carbon atom may also be present therein.

Specific insulation gases for which the present invention is particularly useful are also described in the co-pending international patent application PCT/EP 2011/072510 and PCT/EP 2011/072515, both filed on December 13th 2011, whose contents in their entirety are included herein by reference. Thus, the insulation gas of the apparatus described herein may be any of the fluids described in this co-pending patent application.

In particular, the insulation gas may be a two-component or n-component gas with n>2. Components of the insulation gas may be selected from the group consisting of:
- N₂ and sulfur hexafluoride,
- tetrafluoromethane and sulfur hexafluoride,
- air and cyclic and/or aliphatic fluoropentanones, preferably air and cyclic and/or aliphatic perfluoropentanones, more preferably air and 1,1,1,3,4,4,4-heptafluoro-3-(trifluoromethyl)butan-2-one,
- N₂ and cyclic and/or aliphatic fluoropentanones, preferably N₂ and cyclic and/or aliphatic perfluoropentanones, more preferably N₂ and 1,1,1,3,4,4,4-heptafluoro-3-(trifluoromethyl)butan-2-one,
- air and cyclic and/or aliphatic fluorohexanones, preferably air and cyclic and/or aliphatic perfluorohexanones, more preferably air and 1,1,1,2,4,4,5,5,5-nonafluoro-4-(trifluoromethyl)pentan-3-one,
- N₂ and cyclic and/or aliphatic fluorohexanones, preferably N₂ and cyclic and/or aliphatic perfluorohexanones, more preferably N₂ and 1,1,1,2,4,4,5,5,5 -nonafluoro-4-(trifluoromethyl)pentan-3-one,
- air and cyclic and/or aliphatic fluoroheptanones, preferably air and cyclic and/or aliphatic perfluoroheptanones,
- N₂ and cyclic and/or aliphatic fluoroheptanones, preferably N₂ and cyclic and/or aliphatic perfluoroheptanones,
- CO₂ and 1,1,1,3,4,4,4-heptafluoro-3-(tri-fluoromethyl)butan-2-one,
- air and one or more hydrofluoroether(s),
- N₂ and one or more hydrofluoroether(s),
- air and a mixture of cyclic and/or aliphatic perfluoropentanones, cyclic and/or aliphatic perfluorohexanones, and/or cyclic and/or aliphatic perfluoroheptanones, preferably air and a mixture of 1,1,1,3,4,4,4-heptafluoro-3-(tri-fluoromethyl)butan-2-one and 1,1,1,2,4,4,5,5,5-nonafluoro-4-(tri-fluoromethyl) pentan-3-one,
- N₂ and a mixture of cyclic and/or aliphatic perfluoropentanones, cyclic and/or aliphatic perfluorohexanones, and/or cyclic and/or aliphatic perfluoroheptanones, preferably N₂ and a mixture of 1,1,1,3,4,4,4-heptafluoro-3-(tri-fluoromethyl)butan-2-one and 1,1,1,2,4 ,4,5,5,5-nonafluoro-4-(tri-fluoromethyl)pentan-3-one.

In particular, the second component group may comprise at least one component selected from the group consisting of:
- cyclic and/or aliphatic fluoropentanones, preferably cyclic and/or aliphatic perfluoropentanones, more preferably 1,1,1,3,4,4,4-heptafluoro-3-(tri-fluoromethyl)butan-2-one,
- cyclic and/or aliphatic fluorohexanones, preferably cyclic and/or aliphatic perfluorohexanones, more preferably 1,1,1,2,4,4,5,5,5-nonafluoro-4-(tri-fluoromethyl)pentan-3-one,
- cyclic and/or aliphatic fluoroheptanones, preferably cyclic and/or aliphatic perfluoroheptanones,
- sulfur hexafluoride, and
- hydrofluoroethers.

Additionally or alternatively, the first component group may comprise the components nitrogen and oxygen with intra-component-group relative partial pressures between p(N2)/(p(O₂)+p(N₂))=0.7, p(O₂)/(p(O₂)+p(N₂))=0.3 and p(N₂)/(p(O₂)+p(N₂))=0.9, p(O₂)/(p(O₂)+p(N₂))=0.1, or the components carbon dioxide and oxygen with intra-component-group relative partial pressures between p(CO₂)/(p(O₂)+p(CO₂))=0.7, p(O₂)/(p(O₂)+p(CO₂))=0.3 and p(CO₂)/(p(O₂)+p(CO₂))=0.9, p(O₂)/(p(O₂)+ p(CO₂))=0.1, or the components carbon dioxide and nitrogen with intra-component-group relative partial pressures between p(CO₂)/(p(N₂)+p(CO₂))=0.1, p(N₂)/(p(N₂)+p(CO₂))=0.9 and p(CO₂)/(p(N₂)+p(CO₂))=0.9, p(N₂)/(p(N₂)+p(CO₂))=0.1.

Additionally or alternatively, the second component group may comprise at least one of the components selected from the group consisting of: 1,1,1,3,4,4,4-heptafluoro-3-(tri-fluoromethyl)butan-2-one with a partial pressure between 0.1 bar and 0.5 bar at a temperature of 20 degrees Celsius, 1,1,1,2,4,4,5,5,5-nonafluoro-4-(tri-fluoromethyl)pentan-3-one with a partial pressure between 0.01 bar and 0.3 bar at a temperature of 20 degrees Celsius, sulfur hexafluoride with a partial pressure between 0.1 bar and 2 bar at a temperature of 20 degrees Celsius, and hydrofluorocthers with a partial pressure between 0.2 bar and 1 bar at a temperature of 20 degrees Celsius.

Additionally or alternatively, the first component group A may comprise the components nitrogen and oxygen with intra-component-group relative partial pressures between p(N₂)/(p(O₂)+p(N₂))=0.75, p(O₂)/(p(O₂)+p(N₂))=0.25 and p(N₂)/(p(O₂)+p(N₂))=0.85, p(O₂)/(p(O₂)+ p(N₂))=0.15; and the second component group may comprise the component 1,1,1,3,4,4,4-heptafluoro-3-(tri-fluoromethyl)butan-2-one with a partial pressure between 0.25 bar and 0.3 bar and the component 1,1,1,2,4,4,5,5,5-nonafluoro-4-(trifluoromethyl)pentan-3-one with a partial pressure between 0.02 bar and 0.2 bar at a temperature of 20 degrees Celsius.

According to a further aspect, a method of operating a gas-insulated electrical apparatus may include operating any apparatus described herein.

In the following, the geometry of the electrical apparatus, in particular of the housing and the insulation gas channel system, and other details thereof, will be described with reference to the figures. Within the following description of the figures, the same reference numbers refer to the same or to similar components. Generally, only the differences with respect to the individual embodiments are described. Unless specified otherwise, the description of a part or aspect in one embodiment applies to a corresponding part or aspect in another embodiment, as well.

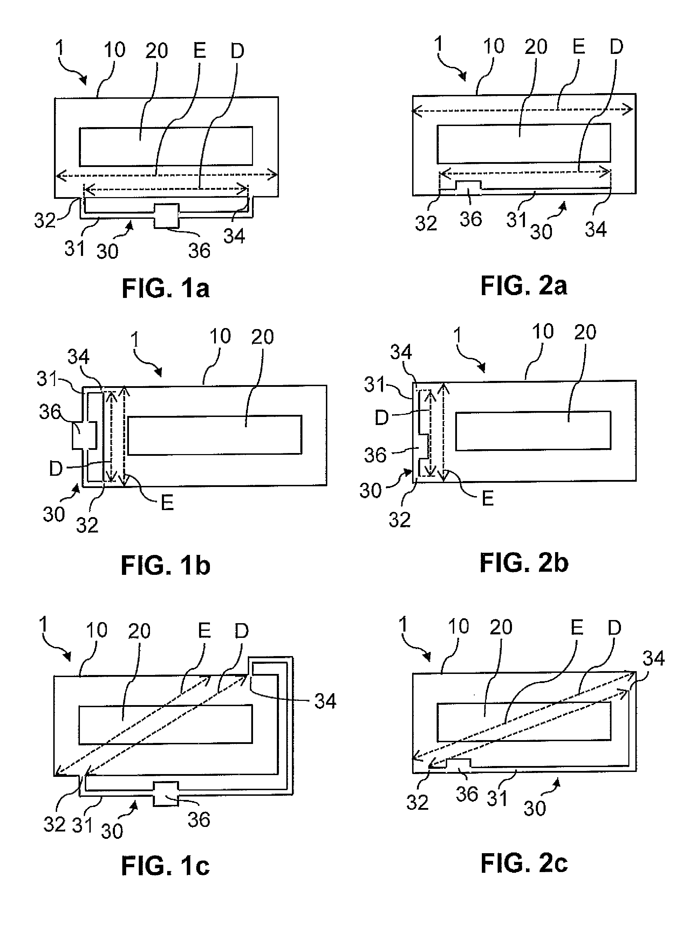

Fig. 1a is a schematic cross-sectional side view of a gas-insulated electrical apparatus 1 according to an embodiment of the present invention. The apparatus 1 has a housing 10, a high-voltage component 20, and a channel system 30. The housing 10 and the high-voltage component 20 are shown only schematically, but are described in more detail in the following. More details about possible embodiments of a standard electrical apparatus 1 as such, i.e. without the invention disclosed herein, can be found e.g. in the publication "ABB Schaltanlagen-Handbuch" edited by Hening Gremmel et al., 11^{th} edition, chapter 11.2.

While the housing 10 is shown as having a rectangular cross-sectional shape, it may have any other shape. A particularly advantageous shape of the housing 10 is a substantially cylindrical shape, i.e. a shape such that the housing has at least an approximately (up to 5% deviation) cylindrical portion. A main portion of the housing 10 consists of a conductive metal body, but the housing may also comprise insulating elements such as an insulator fixed to an opening of the metal body, e.g., in a gas-tight manner. The insulator may be substantially disc-shaped. A conductor may be provided through an opening in the insulator. This conductor may be connected to the high-voltage component 20, thus allowing an electrical connection of the high-voltage component 20 to the outside of the housing 10 through the opening in the insulator.

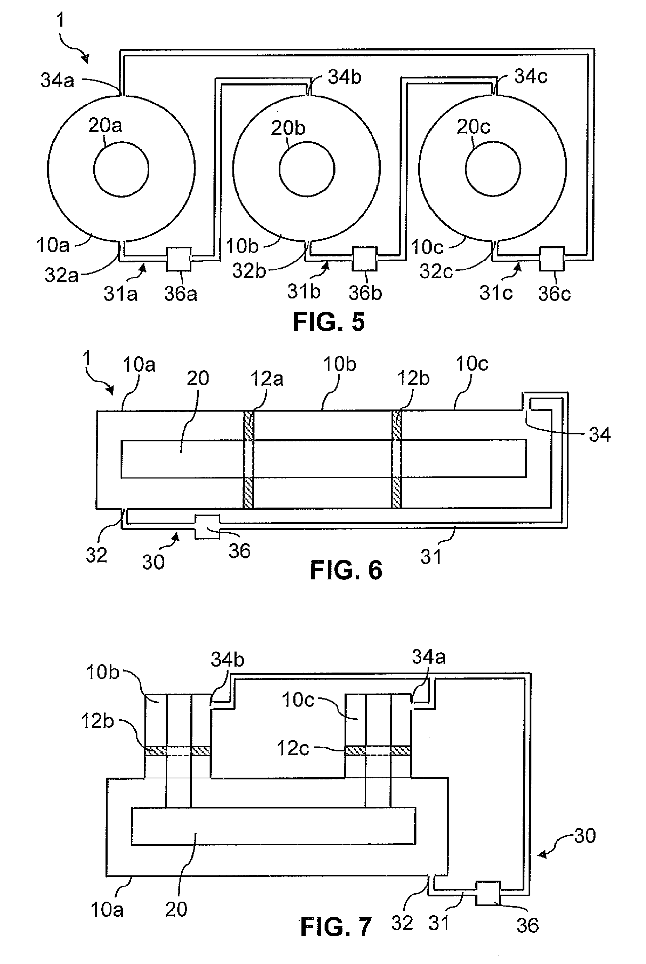

The high-voltage component 20 is held stably at some distance to the conductive body of the housing 10, e.g., by the insulators described above and/or by further support insulators being provided within the housing (as shown, e.g., in Fig. 6 described below). Thereby, the high-voltage component 20 is electrically insulated from the housing 10 (more specifically, from the metal body of the housing), such that electrical breakdown between the housing 10 and the high-voltage component 10 is avoided even when a high voltage (e.g. 52 kV or more) is applied to the high-voltage component 20. These insulators, electrical connections to the high-voltage component 20 and other details of the embodiment described herein are not shown in Fig. 1a.

According to an embodiment, the apparatus 1 represents a circuit breaker having a pair of breaker contacts (arcing contacts and nominal contacts), which are shown collectively and schematically as the high-voltage component 20. These and other details of the high-voltage component 20 are not shown in Fig. 1. In alternative embodiments, the apparatus 1 may also represent other medium-voltage apparatuses or high-voltage apparatuses, such as a busbar, a disconnector, an earthing switch, a combined disconnector and earthing switch, a circuit breaker, a high-current or generator circuit breaker, a medium-voltage switchgear or any module thereof, a high-voltage switchgear or any module thereof, an instrument transformer, e.g. voltage transformer or current transformer, a surge arrester, or the like, or a power transformer, a distribution transformer, or the like.

Furthermore, the apparatus 1 has a gas channel system 30 which is described in more detail in the following. The gas channel system 30 has a gas channel 31, a channel inlet 32 and a channel outlet 34 in gas communication with the housing 10. Thereby, the housing 10 and the gas channel system 30 form a gas-containing, and even gas-tight, volume, which contains an insulating gas therein. Examples of the insulating gas have been given above.

The channel system 30 and the housing 10 can be distinguished from one another, e.g., by a relatively narrow cross-section at the channel inlet 32 and the channel outlet 34. In a non-limiting example, the cross-sectional diameter may be less than 20 cm, or less than 10 cm or even less than 5 cm. Also the cross-sectional diameter may be less than 20 % of a maximum housing diameter. The channel system 30 may be detachable from the housing 10.

The channel system 30, together with the housing 10, defines a loop, in particular a closed loop, allowing a circulation of the insulating gas through the housing 10 and the gas channel system 30 along the loop, in particular closed loop. Thereby, a gas circulation of the insulation gas is enabled within the housing 10, such that inhomogeneities of the insulation gas can be reduced efficiently.

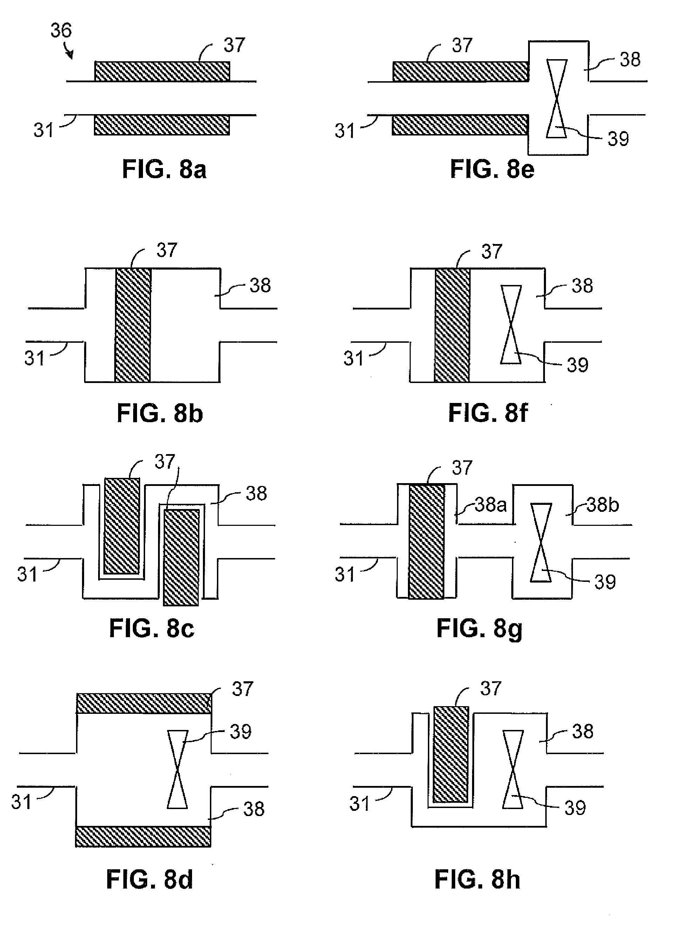

The gas circulation can be enhanced by a functional element 36 arranged inside the gas channel 31. The functional element 36 may include a heater, a forced-flow generator for generating a forced flow of the insulating gas through the gas channel 31, such as a fan, or a combination thereof. Examples of functional elements 36 and their arrangement are described with respect to Figs. 8a to 8h below.

In the embodiment of Fig. 1a, the functional element 36 is arranged in an extended-diameter section of the channel 31. However, in an alternative embodiment, the functional element 36 may be arranged in a non-extended-diameter section of the channel 31, and possibly the channel 31 may have a uniform diameter. In yet another alternative embodiment, there may not be any functional element 36 arranged within the channel 31. Even in the absence of a functional element 36, there may be an enhanced insulation gas circulation, e.g., due to gas convection.

In the embodiment of Fig. 1a, the gas channel 31 extends fully outside of the housing 10. Hence, a torus-like form or topography is formed by the housing 10 and the gas channel 31 with a hole therebetween, in the same manner as a tea cup and its handle have a torus-like shape with a hole formed between the tea cup and the handle. In an alternative embodiment, a portion of the channel 31 may be attached to the housing 10, and the channel 31 may then be arranged only partially outside of the housing 10.

In Fig. 1a, the channel inlet 32 and the channel outlet 34 are spaced at a horizontal distance from one another. The horizontal distance D between the channel inlet 32 and the channel outlet 34 is of the same order of magnitude as (i.e. at least half of) the horizontal length E of the housing (along the same direction as the distance D). Herein, the distance D is measured as the smallest edge-to-edge-distance between the channel inlet 32 and outlet 34. The length E of the housing is the maximum length measured in the relevant direction (i.e. parallel to the direction in which the distance D is measured) from the inner wall to the opposite inner wall of the housing. Due to the distance D being of the same order of magnitude as the length E of the housing, it is ensured that the gas circulation covers a large volume fraction of the housing.

Figs. 1b and 1c are schematic cross-sectional side views of gas-insulated electrical apparatuses similar to that of Fig. 1a. Therein, corresponding elements are assigned the same reference numbers as in Fig. 1a, and the above description of Fig. 1a also applies to Figs. 1b and 1c, except for the differences mentioned below.

In the apparatus of Fig. 1b, the channel inlet 32 and channel outlet 34 are spaced not at a horizontal, but at a vertical distance D from one another. The vertical distance D is of the same order of magnitude as (i.e. at least half of) the vertical height E of the housing (E being measured along the same direction as the distance D, i.e. along the vertical). Herein, the distance D is measured as the smallest edge-to-edge vertical distance between the channel inlet 32 and outlet 34. The length E of the housing is the maximum height measured in the vertical direction from the inner wall to the opposite inner wall of the housing. Due to the distance D being of the same order of magnitude as (i.e. at least half of) the height E of the housing, it is ensured that the gas circulation covers a large volume fraction of the housing. For the same purpose, it is preferred that the channel inlet 32 is provided at or near the bottom of the housing, in particular distanced by less than 10 % or even less than 5 % of the height E from the bottom of the housing. Further, the vertical spacing of the channel inlet and outlet 32, 34 from one another is particularly effective for avoiding layering of different gas components.

In the apparatus of Fig. 1b, the channel inlet 32 and channel outlet 34 are spaced diagonally, i.e. both horizontally and vertically, from one another. The diagonal distance D is of the same order of magnitude as (i.e. at least half of) the diagonal extension E of the housing (E being measured along the same direction as the distance D, i.e. along the diagonal). Herein, the distance D is measured as the smallest edge-to-edge distance between the channel inlet 32 and outlet 34. The length E of the housing is the maximum length measured in the diagonal direction parallel to the smalles edge-to-edge distance between inner walls of the housing.

Figs. 2a to 2c are schematic cross-sectional side views of gas-insulated electrical apparatuses 1 according to further embodiments of the invention. The apparatuses 1 of Figs. 2a to 2c are similar to those of Figs. 1a to 1c, respectively. Thus, the above description of Figs. 1a to 1c also applies to Figs. 2a to 2c, respectively, except for the following difference: In Figs. 2a to 2c, the gas channel 31 extends inside - not outside as in Figs. 1a to 1c - of the housing 10.

In Figs. 2a to 2c, the gas-containing volume is formed by the housing 10 and by the channel 31 which is completely contained within the housing 10. A portion of the channel wall of channel 31 may be formed by the housing wall or be attached (layered) on the housing wall to form a common wall portion. This common wall portion of channel 31 and housing 10 delimits the gas-containing volume to the outside, and is therefore also preferred to as the outer channel wall portion. The remaining channel wall delimits the channel 31 from the inner volume of the housing 10, and is therefore also referred to as the inner channel wall portion.

The inner channel wall portion may be made of a dielectric material such as a polymer-based material, a resin, and/or a ceramic material. The inner channel wall portion is attached to the housing wall and/or to the outer wall portion such that the channel 31 is defined by the inner channel wall portion and the outer channel wall portion. The inner channel wall portion is preferably attached to the housing wall in a flush manner, such as to reduce any influence on the dielectric properties of the interior volume of the housing.

As in Figs. 1a to 1c, the channel system 30 can be distinguished from the remainder of the interior volume of the housing 10 by a relatively narrow cross-section at the channel inlet 32 and the channel outlet 34. In a non-limiting example, the cross-sectional diameter may be less than 20 cm, or less than 10 cm or even less than 5 cm. Also the cross-sectional diameter may be less than 20 % of a maximum housing diameter.

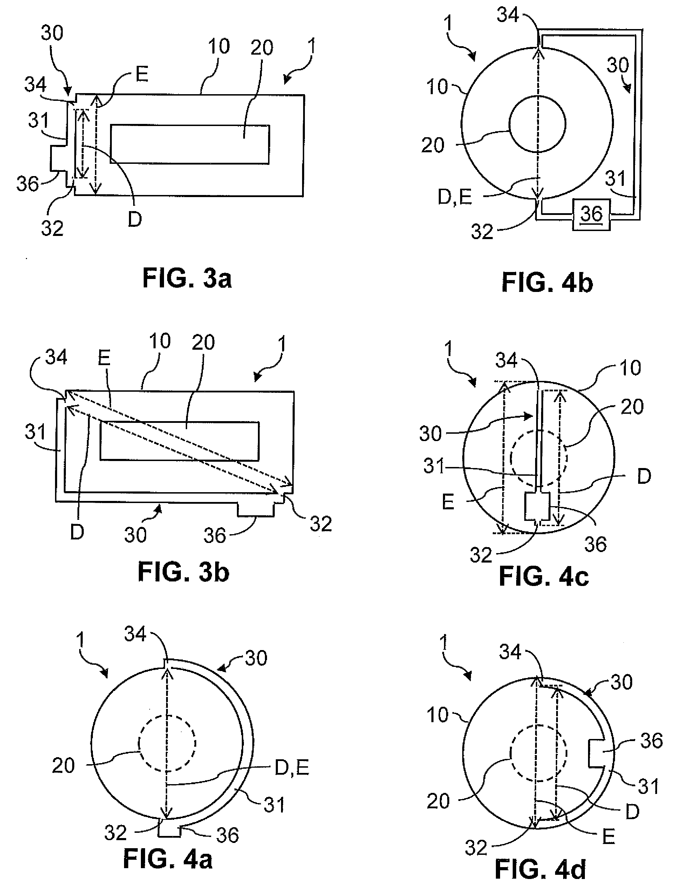

Figs. 3a and 3b are schematic cross-sectional side views of gas-insulated electrical apparatuses 1 according to further embodiments of the invention. The apparatuses 1 of Figs. 3a and 3b are similar to those of Figs. 1b and 1c, respectively. Thus, the above description of Figs. 1b and 1c also applies to Figs. 3a and 3b, respectively, except for the following difference: In Figs. 3a and 3b, the gas channel 31 also extends outside of the housing 10, but is attached to the housing 10. Hence, the apparatus 1 does not form together with the gas channel 31 a torus-like topography.

In the apparatuses 1 of Figs. 3a and 3b, a portion of the channel wall of channel 31 may be formed by the housing wall or be attached (layered) on the housing wall to form a common wall portion. This common wall portion of channel 31 and housing 10 delimits the channel 31 from the inner volume of the housing 10, and is therefore also referred to as the inner channel wall portion. The remaining channel wall delimits the gas-containing volume (which is formed by the housing 10 and the channel system 30) to the outside, and is therefore also referred to as the outer channel wall portion. The housing 10 has openings at the channel inlet 32 and the channel outlet 34. As in Figs. 1b and 1c, the channel system 30 can be distinguished from the remainder of the interior volume of the housing 10 by these openings, and/or by a relatively narrow cross-section at the channel inlet 32 and the channel outlet 34. In a non-limiting example, the cross-sectional diameter may be less than 20 cm, or less than 10 cm or even less than 5 cm. Also the cross-sectional diameter may be less than 20 % of a maximum housing diameter.

In a variation of the embodiments of Figs. 3a and 3b, not shown, the channel inlet 32 and the channel outlet 34 may be spaced at a horizontal distance from one another. The resulting embodiment would correspond to that of Fig. 1a, except for the differences of Figs. 3a and 3b mentioned above.

Figs. 4a to 4d are schematic cross-sectional front views of gas-insulated electrical apparatuses 1 according to further embodiments of the invention. Due to the different perspective, the views of Figs. 4a to 4d complement those of Figs. 1a to 3b. Any of Figs. 4a to 4d can be combined with any of Figs. 1a to 3b, except where visibly incompatible. Correspondingly, the reference sign of corresponding elements are the same in all of these Figures, and the above description of Figs. 1a to 3b also applies to Figs. 4a to 4d, especially for the combinations mentioned below.

The aspects of Fig. 4a can in particular be applied to the embodiments of Figures 3a and 3b. The aspects of Fig. 4b can in particular be applied to the embodiments of Figures 1b and 1c. The aspects of Fig. 4c can in particular be applied to the embodiments of Figures 1b, 1c, 2b, 2c, 3a, and 3b, possibly with small re-arrangement of the position of the channel inlet 32 and outlet 34 as shown in these Figures. The aspects of Fig. 4d can in particular be applied to the embodiments of Figures 1b, 2b, 2c, and 3a, possibly with small re-arrangement of the position of the channel inlet 32 and outlet 34 as shown in these Figures.

1n addition, Figures 4a to 4d illustrate some general aspects of the invention, as described below, which can also be implemented irrespective of other details shown in these Figures.
Figs. 4a and 4d illustrate that the channel 31 may extend along a circumferential outer surface of the housing 10 when viewed from an axial end of the housing.
Fig. 4a and Fig. 4b illustrate that the channel 31 may extend at least partially, but possibly also fully outside a cross-section of the housing 10 perpendicular to a longitudinal axis of the housing.
Fig. 4a and Fig. 4b also illustrate that the channel inlet 32 and outlet 34 may extend from vertically opposite sides of the housing 10.
Fig. 4b further illustrates that the channel 31 may extend at least partially outside of the housing (10), such that a torus-like topography is formed by the housing and the gas channel.
Fig. 4c illustrates that the channel 31 may extend such as to pass through a projection of a middle axis of the housing 10 and/or through a projection of the high-voltage component 20 when viewed from an axial end of the housing.
Fig. 4c further illustrates that the channel 31 may extend along a straight line when viewed from an axial end of the housing.
Figs. 4a to 4c illustrate that the functional element 36 may be arranged in a vertically lower half of the channel 31, or even at the vertically lowest position of the channel 31. This may allow a particularly efficient air circulation due to a pronounced chimney effect, in particular if the functional element 36 includes a heater and/or a fan.

In the embodiments of Figs. 4a to 4d, the apparatuses 1 have a substantially cylindrical shape, but the description is applicable also for other shapes.

Fig. 5 is a schematic cross-sectional front view of a gas-insulated electrical apparatus 1 according to a further embodiment of the invention. Therein, the apparatus has a housing 10 with three housing sections 10a, 10b, 10c, and a channel system 31 with three channels 31a, 31b, 31c. Such an arrangement is particularly useful for a three-phase system having as high-voltage component 20 three high-voltage components 20a, 20b, 20c, each of a different electrical phase and each being individually encapsuled by a respective one of the housing sections 10a, 10b, 10c.

Each of the housing sections 10a, 10b, 10c has two openings which respectively form as the gas inlet 32 the gas inlets 32a, 32b, 32c and as the gas outlet 34 the gas outlets 34a, 34b, 34c. The gas channel system 31 comprises a plurality of gas channels 31a, 31b, 31c, wherein the gas channel 31a interconnects the first housing section 10a, at the gas inlet 32a, with the second housing section 10b, at the gas outlet 34b; the gas channel 31b interconnects the second housing section 10b, at the gas inlet 32b, with the third housing section 10c, at the gas outlet 34c; and the gas channel 31c interconnects the third housing section 10c, at the gas inlet 32c, with the first housing section 10a, at the gas outlet 34a.

Thus, according to this embodiment, each of the gas channels 31a, 31b, 31c interconnects two respective ones of the housing sections 10a, 10b, 10c so that the closed loop traverses alternatingly the housing sections 10a, 10b, 10c and the gas channels 31a, 31b, 31c. This arrangement has the advantage that the gas inside all three housing sections 10a, 10b, 10c is homogenized, such that no separate gas management is necessary within the housing sections 10a, 10b, 10c.

As a general aspect illustrated in Fig. 5, the housing sections 10a, 10b and 10c may be in gas communication only via the channel system 31 (in Fig. 5: via the channels 31a, 31b and 31c).

In Fig. 5, each of the channels 10a, 10b and 10c has a respective functional element 36a, 36b, 36c. In an alternative embodiment, only one or only two of the channels may have a functional element.

Figs. 6 shows a further embodiment of a gas-insulated electrical apparatus 1 in a schematic cross-sectional side view. Therein, the housing 10 comprises a plurality of housing sections 10a, 10b, 10c which are detachably connected to each other and are in gas communication with one another. Namely, the housing sections 10a, 10b, 10c are in gas communication with one another via support insulators 12a and 12b which allow gas to pass through them. The housing sections 10a, 10b and 10c are, thereby, in gas communication independently of the channel system 31.

The gas channel system 31 extends between the first housing section 10a, at which the gas inlet 32 is located, and the third housing section 10b, at which the gas outlet 34 is located. Thus, the gas channel system connects two different ones of the housing sections (for example sections 10a and 10c) and thereby defines a closed loop for the gas circulation through several ones of the housing sections (herein through all three housing sections 10a, 10b, 10c).

Except for the differences mentioned above, the embodiment of Fig. 6 is similar to that of Fig. 1c, and the description of Fig. 1c also applies to the embodiment of Fig. 6.

In a variation of the embodiment of Fig. 6, the gas channel 31 can also be modified analogously to the embodiments of Figs. 1a or 3b.

Fig. 7 shows a further embodiment of a gas-insulated electrical apparatus 1, in particular of a circuit breaker, in a schematic cross-sectional side view. Herein, the housing section 10a contains the arcing contacts and nominal contacts of the circuit breaker as the high-voltage component 20, and has on its vertical top side further housing sections 10b and 10c attached to it. The high-voltage component 20 also comprises electrical connections passing through these housing sections 10b and 10c. Gas-tight insulators (not shown) are arranged at the top side of the housing sections 10b and 10c, and the electrical connections pass through these gas-tight insulators for connecting the high-voltage component 20 to the outside of the housing 10 comprising the housing sections 10a, 10b, 10c.

The housing sections 10a, 10b and 10c are in gas communication with one another via support insulators 12b and 12c which allow gas to pass through them. The housing sections 10a, 10b and 10c are, thereby, in gas communication independently of the channel system 30.

The channel system 30 comprises a channel 31 having a channel inlet 32 coupled to a bottom portion of the housing 10 (more precisely, at the housing section 10a), and forks to two channel outlets 34a and 34b, wherein the outlet 34a is coupled to the housing section 10c and the outlet 34b is coupled to the housing section 10b.

Thus, the embodiment of Fig. 7 illustrates a general aspect, that the housing 10 may have a plurality of protruding housing sections, in particular vertically protruding housing sections (here: housing sections 10b and 10c), and that the channel system 31 may couple to each of the protruding housing sections via a respective one of a plurality of channel inlets and/or channel outlets (here: outlet 34a and 34b).

This arrangement allows for a good gas homogenization even for complex housing geometries. The arrangement may be adapted to other housing geometries, as well. In respects other than those described above, the description of the previously described embodiments is applicable to the embodiment of Fig. 7, as well.

In the following, the optional functional element 36 of the embodiments described herein is described in more detail with reference to Figs. 8a to 8h. These Figures show portions of a gas channel 31 and the functional element 36, which may be applicable to any embodiment disclosed herein, in a schematic cross-sectional side view.

According to a general embodiment illustrated in these Figures 8a to 8h, the functional element 36 may include a heater 37. The heater 37 may be an electrical heater 37 which generates heat by passing a current through an electrically resistive element. In an alternative embodiment, the heater 37 may have flow channels for letting a heating fluid pass therethrough.

Generally, the heater 37 may be powered by a power source (which may be a heat source) that is independent of a current flowing through the high-voltage component 20, such that the heater 37 is operable independently of such a current.

According to the embodiment of Fig. 8a, the heater 37 is arranged circumferentially around the channel 31 and is thus located outside of the gas-containing volume. This has the advantage of allowing the heater 37 to be contacted to an outside energy source without penetrating the gas containment for the insulation gas.

The heater 37 is nevertheless in contact with the gas channel 31, in the sense that heat is transferred from the heater 37 to the inside of the the gas channel 31 along a very short path (for example less than 2 cm) through the solid material of the channel wall. In this embodiment, the channel wall is preferably made of a heat-conductive material, such as metal at least in the region of contact with the heater 37. In an embodiment, heat-conductive material is defined as material having a thermal conductivity of at least 10 W/(m·K).

In the embodiment of Fig. 8b, the channel 31 has an extended-diameter section 38. The heater 37 is arranged within the extended-diameter section 38. The heater 37 extends in an entire cross-sectional area of the channel 31 and has openings for letting the insulation gas through. This arrangement allows for a particularly efficient heat transfer to the insulation gas.

In the embodiment of Fig. 8c, the channel 31 has an extended-diameter section 38 which has two concave intrusions into which respective heaters 37 are inserted from the outside of the gas-containing volume. Except for this geometrical arrangement, this embodiment is similar to the embodiment of Fig. 8a and hence the description of Fig. 8a also applies to Fig. 8c. In comparison to Fig. 8a, the geometry of Fig. 8c allows for a large surface at which heat is transferred to the insulation gas, and hence for an improved heat transfer. In a variation of the embodiment of Fig. 8c, a different number of concave intrusions may be present. Generally, the extended-diameter section 38 may have at least one concave intrusion and correspondingly at least one heater 37.

In embodiments, a fan can be provided, in particular in addition or as alternative to a heater 37. For example, in embodiments of Figs. 8d to 8h, a fan 39 is provided in addition to the heater 37. In Fig. 8d, the channel 31 has an extended-diameter section 38, and the fan 39 is arranged within the extended-diameter section 38. The heater 37 can be arranged circumferentially around the channel 31, and thus the description of Fig. 8a applies to the heater 37.

The embodiment of Fig. 8e is similar to that of Fig. 8d, but while in Fig 8d the heater 37 is arranged around the channel 31 at the extended-diameter section 38, in the alternative embodiment shown in Fig. 8e, the heater 37 is arranged around the channel 31 at a different portion of the extended-diameter section 38 (here for example directly adjacent to the extended-diameter section 38).

In the embodiment of Fig. 8f, the channel 31 has an extended-diameter section 38, and both the fan 39 and the heater 37 are arranged within the extended-diameter section 38.

In the embodiment of Fig. 8g, the channel 31 has two extended-diameter sections 38a and 38b which are separated from one another by a smaller-diameter section of the channel 31 (i.e. with a diameter which is smaller than each of the extended-diameter sections 38a and 38b). The heater 37 is arranged within the extended-diameter section 38a, and the fan 39 is arranged within the extended-diameter section 38b.

In the embodiment of Fig. 8h, the channel 31 has an extended-diameter section 38, and the fan 37 is arranged within the extended-diameter section 38. The extended-diameter section 38 further has a concave intrusion, and in analogy to Fig. 8c, the heater 37 is inserted into the concave intrusion from the outside of the gas-containing volume. As with Fig. 8c, any other number of concave intrusions and heaters 37 may also be provided.

The functional elements 36, in particular heater(s) 37 and/or fan(s) 39, shown exemplarily in Figs. 8a to 8h may be arranged such that the flow of insulation gas is from left to right or from right to left. In a preferred embodiment, the elements 36; 37, 39 are arranged for a flow of insulation gas from right to left. Accordingly, the fan 39 may be arranged downstream of the heater 37. This arrangement has the advantage that the heater 37 is located at a low-pressure side of the fan 39 and that thereby an obstruction to the gas flow is reduced.

In an alternative embodiment, the functional elements 36; 37, 39 are arranged for a flow of insulation gas from left to right. Accordingly, the fan 39 may be arranged upstream of the heater 37. This arrangement has the advantage that a flow of heated air onto the fan 39 is avoided.

However, especially if the heater 37 is arranged outside the gas-containing volume, such as in the embodiments of Figs. 8d, 8e and 8h, it also presents advantages to arrange the fan 39 upstream of the heater 37. This arrangement has the advantage that the heater 37 is located at a high-turbulence side of the fan 39 and that thereby a heat transfer to the gas is improved.

Each of the embodiments described herein have the advantage of allowing improved homogeneity of the insulation gas present in the gas-containing volume. Therefore, these embodiments are particularly advantageous for an insulation gas also containing components other than SF₆, in particular an insulation gas having more than one gas component and preferably as disclosed herein.

While the foregoing is directed to embodiments, other and further embodiments may be devised without departing from the basic scope determined by the claims. For example, the gas channel system 30 may comprise more than one gas channel 31. In another example, the gas channel system 30 may comprise additional elements such as gas composition sensors, gas pressure sensors, gas inlet valves for introducing additional gas components, gas outlet valves for removing gas from the gas-containing volume, or the like.

## Claims

1. A gas-insulated electrical apparatus (1), in particular a high-voltage power distribution or transmission apparatus (1), comprising
a housing (10);
a high-voltage component (20) arranged within the housing (10) and adapted for application of a high voltage; and
a gas channel system (30) having a gas channel (31), a channel inlet (32) and a channel outlet (34) in gas communication with the housing (10), wherein
the housing (10) and the gas channel system (30) form a gas-containing volume containing an insulating gas therein, and define a loop allowing a circulation of the insulating gas through the housing (10) and the gas channel system (30) along the loop.

2. The gas-insulated electrical apparatus (1) according to claim 1, wherein the loop is a closed loop for circulation of the insulating gas, and/or wherein the loop comprises an additional source of insulating gas for refilling insulating gas into the housing (10).

3. The gas-insulated electrical apparatus (1) according to any one of the preceding claims, further including a heating element (37) arranged inside the gas channel (31) and/or in contact to the gas channel (31).

4. The gas-insulated electrical apparatus (1) according to any one of the preceding claims, wherein the electrical apparatus (1) defines a vertical direction when mounted, and wherein the channel inlet (32) and the channel outlet (34) are located at different vertical heights of the housing (10), in particular wherein a vertical distance (D) between the channel inlet (32) and the channel outlet (34) is at least half of a vertical height of the housing (10).

5. The gas-insulated electrical apparatus (1) according to any one of the preceding claims, wherein the channel inlet (32) and the channel outlet (34) are spaced apart from each other by a distance (D) being at least half of a linear extension (E) of the housing (10) in a direction between the channel inlet (32) and the channel outlet (34).

6. The gas-insulated electrical apparatus (1) according to any one of the preceding claims, wherein the gas channel system (30) comprises a forced-flow generator (39) for
generating a forced flow of the insulating gas through the gas channel (31), the forced-flow generator (39) being arranged within the gas channel (31).

7. The gas-insulated electrical apparatus (1) according to any one of claims 2 to 6, wherein the channel (31) has an extended-diameter section (38), and wherein at least one of the forced-flow generator (39) and the heater (37) is arranged within and/or in direct contact with the extended-diameter section (38).

8. The gas-insulated electrical apparatus (1) according to any one of the preceding claims, wherein the gas channel system (30) comprises at least one of a gas filter, a gas inlet port, a gas pressure sensor, a gas temperature sensor, a gas chemical composition sensor, and an active or passive gas cooling element.

9. The gas-insulated electrical apparatus (1) according to any one of the preceding claims, wherein the gas channel (31) extends at least partially outside of the housing (10).

10. The gas-insulated electrical apparatus (1) according to any one of the preceding claims, wherein the gas channel (31) extends at least partially within the housing (10).

11. The gas-insulated electrical apparatus (1) according to any one of the preceding claims,
wherein
the housing (10) comprises a plurality of housing sections (10a, 10b, 10c) detachable from each other and in gas communication with one another, and wherein the gas channel system extends between at least two different ones (10a, 10c) of the housing sections (10a, 10b, 10c).

12. The gas-insulated electrical apparatus (1) according to any one of the preceding claims,
wherein
the housing (10) comprises a plurality of housing sections (10a, 10b, 10c) and the gas channel system (30) comprises a plurality of gas channels (31a, 31b, 31c), wherein
each of the gas channels (31a, 31b, 31c) interconnects two respective ones of the housing sections (10a, 10b 10c) via a respective channel inlet (32a, 32b, 32c) and a respective channel outlet (34a, 34b, 34c) so that the loop, in particular the closed loop, traverses alternatingly the housing sections (10a, 10b, 10c) and the gas channels (31a, 31b, 31c).

13. The gas-insulated electrical apparatus (1) according to any one of the preceding claims, wherein the insulation gas comprises at least a first and a second gas component, wherein the first gas component forms a carrier gas and the second gas component comprises heavier molecules, and wherein further the electrical apparatus (1) comprises control means for controlling the circulation of the insulating gas through the loop such that a predetermined concentration ratio of the first gas component with the second gas component is maintained in the housing (10) at least during operation of the electrical apparatus (1).

14. The gas-insulated electrical apparatus (1) according to any one of the preceding claims, wherein the insulation gas comprises at least a first gas component and a second gas component, wherein the first gas component is selected from the group consisting of:
- nitrogen,
- oxygen,
- carbon dioxide,
- nitric oxide,
- nitrogen dioxide,
- nitrous oxide,
- argon,
- methanes, in particular partially or fully halogenated methanes, in particular tetrafluoromethane or trifluoroiodomethane,
- air, in particular technical air or synthetic air, and
- mixtures thereof, and
wherein the second gas component is selected from the group consisting of:
- sulfur hexafluoride,
- partially or fully fluorinated ethers, in particular hydrofluoro monoethers, hydrofluoro monoethers containing at least 3 carbon atoms, perfluoro monoethers, or perfluoro monoethers containing at least 4 carbon atoms,
- partially or fully fluorinated ketones, in particular hydrofluoro monoketones, perfluoro monoketones, perfluoro monoketones comprising at least 5 carbon atoms, or perfluoro monoketones comprising exactly 5 or 6 or 7 or 8 carbon atoms, and
- mixtures thereof.

15. The gas-insulated electrical apparatus (1) according to any one of the preceding claims, wherein the electrical apparatus (1) is selected from the group consisting of: busbar, disconnector, earthing switch, combined disconnector and earthing switch, circuit breaker, high-current or generator circuit breaker, medium-voltage switchgear or any module thereof, high-voltage switchgear or any module thereof, instrument transformer, voltage
transformer, current transformer, surge arrester, power transformer, distribution transformer.

16. A method of operating a gas-insulated electrical apparatus (1), in particular the electrical apparatus (1) of any of the preceding claims, in particular a high-voltage power distribution or transmission apparatus (1), the electrical apparatus (1) comprising a housing (10); a high-voltage component (20) arranged within the housing (10); a gas channel system (30) having a gas channel (31), and an insulating gas contained in the housing (10) and the gas channel system (30), the method comprising
- applying a high voltage to the high voltage component (20); and
- forcing a circulation of the insulating gas along a loop, in particular a closed loop, through the housing (10) and the gas channel system (30).

17. The method of operating according to claim 16, wherein the insulation gas comprises at least a first gas component and a second gas component, wherein the first gas component forms a carrier gas and the second gas component comprises heavier molecules, and wherein further a flow rate of the insulating gas circulating through the loop defined by the housing (10) and the gas channel system (30) is controlled such that a predetermined concentration ratio of the first gas component with the second gas component is maintained in the housing (10) at least during operation of the electrical apparatus (1).
